Europäisches Patentamt

European Patent Office

Office européen des brevets

(19)

(11) Publication number: **0 318 693**

**A1**

## (12) EUROPEAN PATENT APPLICATION

(21) Application number: 88117534.3

(22) Date of filing: 21.10.88

(51) Int. Cl.⁴: **F16K 27/02 , F16K 1/226**

(30) Priority: 26.11.87 IT 2277687

(43) Date of publication of application:
07.06.89 Bulletin 89/23

(84) Designated Contracting States:
AT DE FR IT

(71) Applicant: **OFFICINE MECCANICHE FRATELLI MENCARELLI S.R.L.**
**Via Campestre, 19**
**I-20091 Bresso (MI)(IT)**

(72) Inventor: **Mencarelli, Vittorio**
**Via Vassallo, 31**
**I-20125 Milano(IT)**

(74) Representative: **Dr. Ing. A. Racheli & C.**
**Viale San Michele del Carso, 4**
**I-20144 Milano(IT)**

(54) Method for making a valve body and a valve thus obtained.

(57) The invention foresees cutting a first disk from a metal sheet shaping it by means of pressing, so as to form a concave flanged element (1); at least performing a first central hole (12) in said flanged element (1), said element (1) is assembled by means of welding with weld material (10) to a cup (2) obtained by shaping a second full disk made of metal sheet, confiring it a shape such as to penetrate in the hole (12) of the flanged element (11), performing at least a second central hole (23). Preferably one part of the valve body capable of engaging the duct is threaded.

FIG. 9

EP 0 318 693 A1

## METHOD FOR MAKING A VALVE BODY AND A VALVE THUS OBTAINED

The invention concerns a process for producing the external body of a valve, and also the product thus obtained.

Up till now the valve body for fluid currents is made in two halves by turning a bar or metal tube (U.S. Patent no. 2.912.218.). This process is long and complex; few pieces are produced daily and, inevitably they have high costs. The possibility of producing said pieces by means of pressing has been up till now excluded due to the characteristics that the valve bodies must have. In particular, the housing capable of receiving the seal has to be appropriately moulded to hold said seal even when this is urged to exit from the movement of the closing means, in particular if this is in the shape of a butterfly.

Furthermore the threaded ring nut which has to engage the entrance or exit ducts often has to have robust threading and few threads in the case the valve is used for the flow of alimentary fluids (for example milk) to facilitate its dissasembly, so as to avoid stagnation of the fluid that by going off damages the subsequent production.

Aim of the present invention is to provide a process for producing quickly and at low cost a valve body having all those characteristics that are needed for a good operation of the valve and for its long life.

Said aim was reached by providing: the cutting out of a first disk from a metal sheet, moulding it appropriately by means of pressing so as to form a concave flanged element, performing at least a first central hole in said flanged element, assembling said element by means of welding with weld material to a cup obtained by pressing of a second full disk made of metal sheet confering it a shape such as to penetrate in said first hole, performing at least a second central hole in the cup so assembled and moulding the anular portion that surrounds said second central hole so as to make a protruding ledge that prevents the escape of the seal.

With this process a semibody is obtained, forming half of a valve body, having a junction (threaded or not) fast to a flange that performs the coupling with the other semibody, each semibody having an internal U-shaped housing apt to receive and hold an anular seal between the two halves of the valve body.

To enable the passage of the central shaft, two opposing half housings can be sheared in each semibody of the valve, precisely in the flanged element.

Preferably the seats which enable the passage of the control shaft are subsequently worked upon in such a way as to have flaring walls, that is, with a conical shape that opens to the outside of the valve, in order to engage the edge of the seal, so as to guarantee a better hold of said seal. This is found to be extremely useful in the case of high temperature and high pressure.

When a robust threaded ring nut is necessary, a third ring nut element is cut out, pressed in a cup shape, centrally perforated, then inserted in the valve body so as to be adjacent to said flanged element and to said cup, in order to be welded thereto.

Preferably a part of the valve body apt to engage the duct, is threaded.

For the manual control a lever can be forseen fast to another cup element, having a central hole engaging the control shaft, while its skirt engages the coupled flanges of the two valve body halves, said skirt having a set of notches diametrically opposed and appropriately spaced, so as to receive the edge of the two joined flanges. By rotating the lever, the cup rotates by a corresponding angle; the notch that before rotation housed the two joined flanges is disengaged from them and a subsequent notch takes its place. Each of these notches enables a specific opening of the valve, that is a specific position of the internal closing element. This type of control lever, without spring means, uses the elasticity of the internal seal while passing from one notch to the subsequent one.

The process according to the present invention forsees also that together with the first and/or second hole other holes may be performed.

The invention will now be clarified by means of the appended drawings, in which:

fig. 1 shows a view from above of a first component of the semibody, the flanged element;

fig. 2 shows a view from above of a second component, the cup before its assembly;

fig. 3 shows view from above of a third component, the ring nut;

fig. 4 shows a section along the line 4-4 of figure 1;

fig. 5 shows a section along the line 5-5 of figure 2;

fig. 6 shows a section along the line 6-6 of figure 3;

fig. 7 shows a sectional view af the elements of figures 1,2, and 3 just assembled;

fig. 8 shows a view similar to that of figure 7 in a later working stage;

fig. 9 shows a lateral view partially in section of the finished valve semibody;

fig. 10 shows a view similar to that of figure 8 of a different valve semibody;

fig. 11 shows a sectional view of the semibody of figure 10 at the end of a subsequent working stage;

fig. 12 shows a view partially in section of a first complete valve;

fig. 13 shows a view of a second valve, different from that in figure 12;

fig. 14 shows a view of the valve in figure 13 with its control lever;

fig. 15 shows an enlarged partially sectioned view of figure 14.

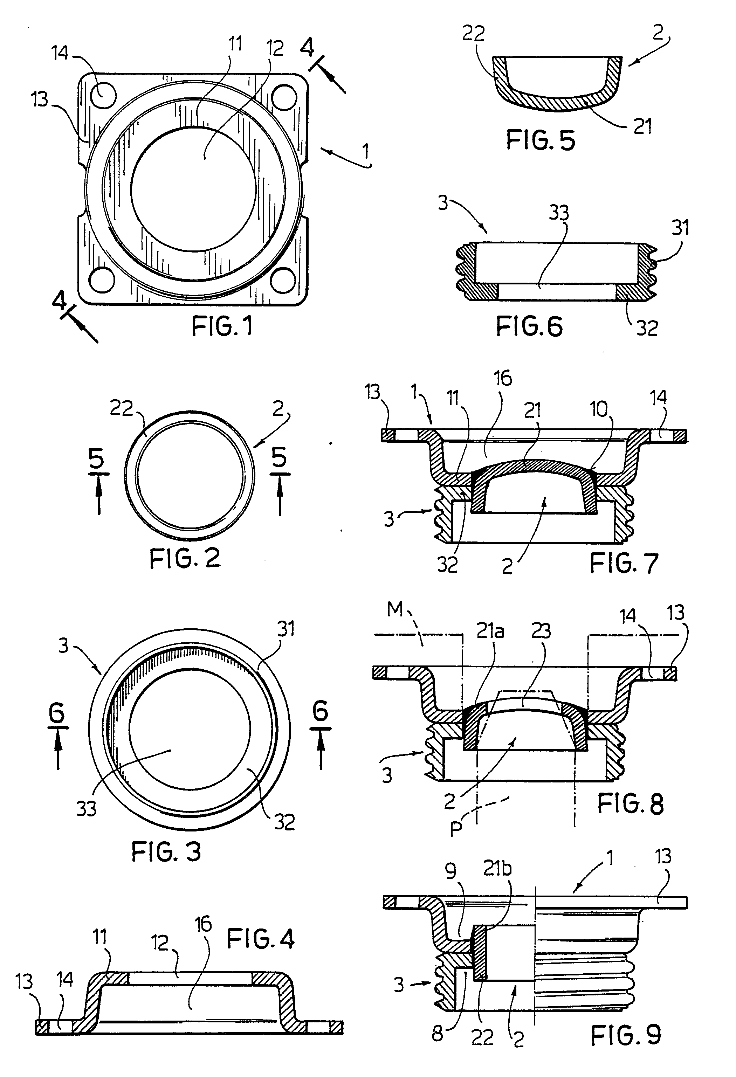

In figures 1 to 6 the three different components are shown, they are obtained by cutting out a metal sheet and appropriately moulding the cut blanks.

The first component is the flanged element 1, (visible in figures 1 and 4); it has a concave circular central portion 11, bearing a central hole 12 and a quadrangular peripheral flange 13, with small holes 14 for fixing it against the other semibody. To form the flanged element 1 a blank is cut out of a metal sheet, it is moulded by pressing, creating a cavity 16, then holes 12 and 14 are performed. The external form of the flange 13 obviously can also be polygonal.

The second component, the cup 2 (visible in figures 2 and 5) has a bottom 21 and lateral walls 22. The cup 2 is obtained by cutting out and pressing a metal sheet disk so as its final shape is such as to penetrate in the central hole 12 of the flanged element.

The third element is a ring nut 3 (visible in figures 3 and 5); it has lateral walls preferably in the shape of a truncated cone 31 limited at one end by a internal flange 32. The ring nut 3 is obtained by cutting out a disk, moulding it in a cup shape, perforating it centrally and then possibly threading it.

The three components 1, 2 and 3 are now assembled, by means of a weld 10 made with weld material, to form the piece shown in fig. 7, in which part 11 of the element 1 is adjacent to flange 32 of the ring nut 3, while the cup 2 is received in the through hole formed by hole 12 of the flanged element 1 aligned with hole 33 limited by flange 32 of the ring nut 3, its bottom 21 facing towards the flanged element 1. In figure 7 the weld 10 is visible. It joins the three components and is carried out from the side of the flanged element 1, that is, from the inside of the valve body. When the weld 10 has been carried out, cup 2 is perforated in such a way to form an annular portion 21a that surrounds the hole 23 forming a flange. By means of a matrix M and a punch P (figure 8) an edge 21b is performed (as shown in figure 9) creating a seat 9 having a U shaped section capable of housing a seal for the valve closing element.

At the opposite side a second annular seat 8 is formed by the lateral walls 22 of the cup 2 and by the ring nut 3. This seat 8 may receive a seal between duct and valve.

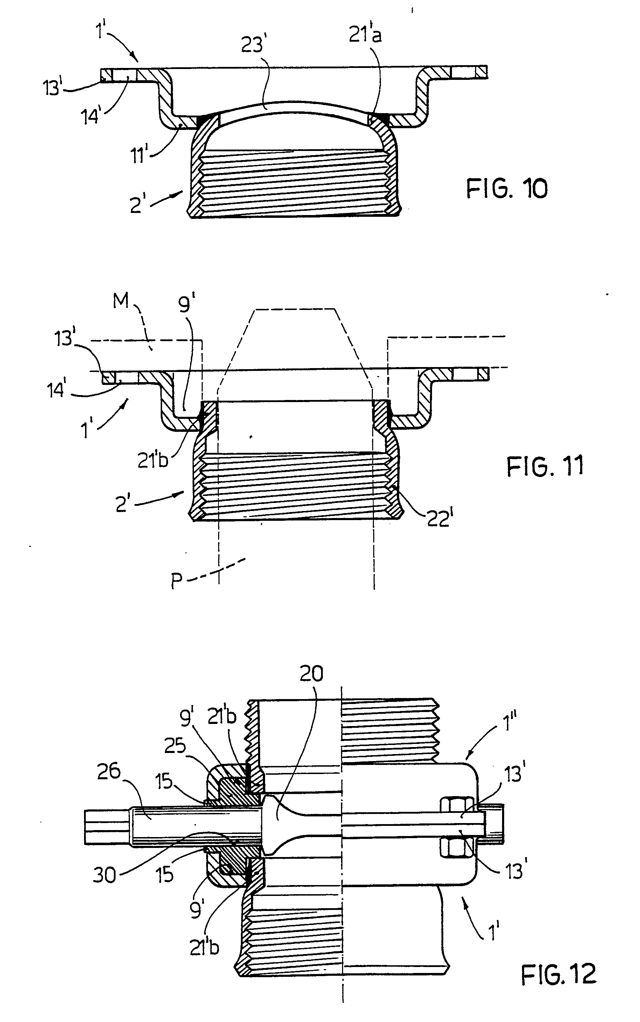

In figure 10 a semibody is shown made up by only two components 1' and 2' similar to the flanged element 1 and the cup 2 of the example described hereinbefore. Cup 2' is received in a hole of the flanged element 1' and is welded to it, then a hole 23' is performed in the center of cup 2; then the annular portion 21'b is raised by means of punch P and matrix M (as shown in figure 11). The semibody thus formed still has flange 13' and holes 14' for the relative coupling, and also a housing 9' capable of receiving the seal 25 (fig. 12) for the valve closing element. The annular end 22' of cup 2' can be threaded internally (as in the figure) or externally and/or molded as a truncated cone (as shown in the drawing).

In figure 12 a complete valve is shown. It consists of two semibodies 1' and 1" similar to those of figure 11, one of which is threaded internally and the other externally. They are placed in such a way that flange 13' of one is adjacent to flange 13' of the other, a closing element 20, in this example a butterfly, is inserted in two opposite holes 30 provided in seal 25. This latter seal 25 is received in housings 9', which face one another. In each flanged element 1' and 1" a truncation is carried out to form two passages 15 for the shaft 26 fast with the closing element.

In the same way a valve can be formed with two semibodies of the type shown in figure 9.

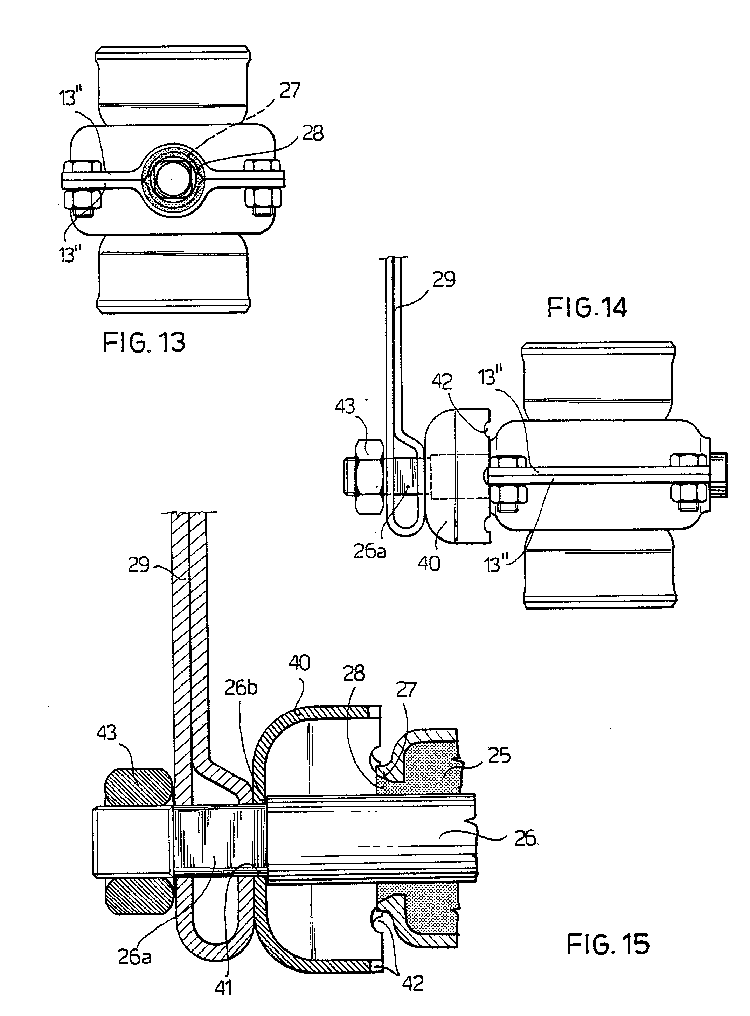

In figures 13, 14 and 15 a valve is shown wherein adjacent flanges 13" have been sheared, then turned to form flared walls 27 that open towards the outside of the valve. This conical configuration of the walls 27 guarantees a sure grip of the latter with edge 28 of the seal 25 and thus a better retention of said seal.

In figures 14 and 15 the valve is completed by means of a manual control lever 29 blocked by a nut 43, the lever engaging the polygonal section 26a of the shaft 26 fast to a further cup element 40. The cup element 40 is provided with a central polygonal hole 41 apt to receive the polygonal sectional portion 26a of the shaft 26, so that the lever 29 abuts the cup, while the latter can abut the upper part of the cilindrical portion 26b. Said cup 40 has furthermore an annular skirt engaging the joined flanges 13"; and provided with a set of diametrically opposed notches 42 in the form of an arc of circumference. The major cord of said notches 42 has dimentions approximately equal to the width of the two flanges 13" when joined; the notches 42 may house the edges of said joined flanges 13". The nut 43 blocks the longitudinal sliding of lever 29 of shaft 26.

For every position of the two diametrically opposed notches 42 engaged in two portions at the same distance from the shaft 26 of the joined flanges 13″ a stable position of the butterfly closing element is obtained. To modify the valve opening rate notches 42 are disingaged from flanges 13″, then lever 29 is rotated untill a subsequent notch corresponding to the desired position of the closing element has been reached by the aforesaid portions of the joined flanges 13″. For each position of the notches 42 a valve adjustment is obtained: the lever 29 can be foreseen with a complete 360° rotation or appropriate catches on the circunference of the cup can limit the rotation of the lever to 90° or 180°.

In this type of control lever, without elastic spring means, the elasticity of the seal 25 is used.

The cup element 40, as well as the cup-shaped component 2 of the valve body can be formed from metal sheet.

## Claims

1. A method for producing a valve body consisting of two semibodies, characterized in that a first blank is cut out from a metal sheet, it is appropriateley moulded by means of pressing so as to form a concave flanged element (1, 1′, 1″), at least a first central hole (12), is performed in said flanged element (1, 1′, 1″), said element (1, 1′, 1″) is assembled by means of welding with weld material (10) to a cup (2, 2′) obtained by moulding a second blank made of metal sheet giving it a shape such as to enable it to penetrate in the first central hole (12) of the flanged element (1), at least a second central hole (23, 23′) is performed in the cup (2, 2′) thus assembled, an annular portion (21a, 21′a) that surrounds said second central hole (23; 23′) is mold thus obtainig a protruding ledge (21b, 21′b) that blocks the exit of the seal (25).

2. A method according to claim 1, characterized in that, when a robust connection is necessary, a third blank (3) is cut out, pressed in a cup-shape and perforated, then inserted in such a way as to be adjacent to said flanged element (1) and to said cup (2), so as to be welded together with these.

3. A method according to claims 1 or 2, characterized in forseeing to shear in the finished valve semibody two opposing half seats in each flanged element (1,1′).

4. A method according to claims 1 or 2, characterized in shearing in the finished valve semibody two opposite half seats in each flanged element and to turn them to produce conic walls (27) that open towards the outside.

5. A method according to one of the preceding claims, characterized in that a part of the valve semibody is threaded to engage with the ducts.

6. A method according to any of the preceding claims, characterized in that together with the first (12) and/or second hole (23, 23′) other holes are performed (14, 14′).

7. A valve formed by two simmetrical semibodies that hold a seal in which a closing element is inserted, characterized in that the valve body is completely in pressed metal sheet and has a housing (9, 9′), for the seal (25), the section of which is U-shaped, that is, positively retaining the seal with its protruding ledge (21b, 21′b).

8. A valve according to claim 7, characterized in that it is completed by a control lever (29) fast to a cup element (40), which is mounted directly on the control shaft (26) and has a skirt engaged with the joined flanges of the valve body, said skirt having a set of notches (42) diametrically opposed appropriately spaced to house the edge of the two joined flanges (13″).

9. A valve according to claim 7 or 8, characterized in that the flanges (13″) of thee two semibodies have opposite half passages the internal walls (27) of which have a conical shape that opens towards the outside of the valve and engages an edge (28) of the seal (25).

FIG.1

FIG.2

FIG.3

FIG.4

FIG.5

FIG.6

FIG.7

FIG.8

FIG.9

1'

13'

14'

11'

2'

23'

21'a

FIG. 10

M

9'

13'

14'

1'

21'b

2'

22'

P

FIG. 11

20

9'

21'b

25

26

15

30

15

9'

21'b

1''

13'

13'

1'

FIG. 12

EP 0 318 693 A1

FIG. 13

FIG. 14

FIG. 15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 810 683 (NEUMO-ARMATURENFABRIK-APPARATEBAU-METALLGIESSEREI GmbH) * Whole document * | 1,2,7,8 | F 16 K 27/02 F 16 K 1/226 |
| X | FR-A-2 357 797 (M. DELBERGUE) * Claims * | 1,7,8 | |
| X | EP-A-0 114 417 (NEUMO APPARATEBAU-METALLGIESSEREI GmbH) * Abstract * | 1 | |
| A | US-A-2 729 238 (MARMAN PRODUCTS CO.) | | |

TECHNICAL FIELDS SEARCHED (Int. Cl.4)

F 16 K 27/00
F 16 K 1/00

The present search report has been drawn up for all claims

| Place of search | Date of completion of the search | Examiner |
|---|---|---|
| THE HAGUE | 07-03-1989 | DE SMET F.P. |